# EUROPÄISCHE PATENTSCHRIFT

(11) **EP 2 785 228 B1**
(45) Veröffentlichungstag und Bekanntmachung des Hinweises auf die Patenterteilung: **06.04.2016**
(21) Anmeldenummer: 12791183.2
(22) Anmeldetag: 26.11.2012
(51) Int. Cl.: A47J 43/044, A47J 36/16

(54) **AUFSATZ EINER KÜCHENMASCHINE**
ATTACHMENT OF A KITCHEN MACHINE
PIÈCE RAPPORTÉE D'UNE MACHINE DE CUISINE

(30) Priorität: 01.12.2011 DE 102011087527
(43) Veröffentlichungstag der Anmeldung: 08.10.2014
(73) Patentinhaber: BSH Hausgeräte GmbH, 81739 München (DE)
(72) Erfinder: KRÜGER, Tobias, 81541 München (DE); SHIPARD, Karline, A-4490 St. Florian (AT)
(86) Internationale Anmeldenummer: PCT/EP2012/073626
(87) Internationale Veröffentlichungsnummer: WO 2013/079444

(56) Entgegenhaltungen:
- DE-A1-102009 016 897
- US-A- 4 155 656
- US-A- 4 197 018
- US-A- 6 070 519
- US-A1- 2005 207 273

## Beschreibung

Die Erfindung betrifft einen Aufsatz für eine Schüssel einer Küchenmaschine. Die Erfindung betrifft ferner eine Küchenmaschine mit einem solchen Aufsatz.

Eine Küchenmaschine im Sinne der vorliegenden Erfindung ist ein Küchengerät mit einem vorzugsweise elektrischen Antrieb und zumindest einem Werkzeug für ein Verarbeiten von Nahrungsmitteln, insbesondere zum Kneten, Rühren, Raspeln, Mahlen, Zerkleinern, Pürieren oder Entsaften von Nahrungsmitteln bzw. Lebensmitteln. Das Werkzeug wird durch den Antrieb angetrieben. Eine Küchenmaschine im Sinne der vorliegenden Erfindung umfasst eine Rühr- oder Auffangschüssel, in der mit Hilfe eines durch den Antrieb antreibbaren Werkzeugs Nahrungsmittel verarbeitet werden können. Eine erfindungsgemäße Küchenmaschine kann ein oder mehrere Anbauteile mit antreibbarem Werkzeug umfassen, beispielsweise einen Zerkleinerer, einen Mixaufsatz, eine Getreidemühle oder eine Saftpresse. Als Werkzeuge können erfindungsgemäß beispielsweise Schneid- und Raspelscheibe, Knethaken oder Schlag- und Rührbesen vorhanden sein.

Aus der Druckschrift DE 69906698 T2 geht eine Küchenmaschine der eingangs genannten Art mit einem Gefäß hervor, auf welches ein Gehäuse aufgesetzt werden kann. Das Gehäuse umfasst einen Antriebsmotor, mit dem ein Arbeitswerkzeug für ein Verarbeiten von in dem Gefäß befindlichen Nahrungsmitteln angetrieben werden kann. Ein Deckel mit eingebautem Motor einer Küchenmaschine für eine Schüssel ist aus der Druckschrift DE 699 09 820 T2 bekannt.

Die DE 10 2009 016 897 A1 offenbart ein Aufsatzteil für ein Gefäß zur Speisezubereitung. An dem Aufsatzteil ist ein Bewegungsteil vorgesehen, welches ins Gefäßinnere hineinragt. In der US 6 070 519 ist eine Zitruspresse beschrieben.

US 2005/0207273 A1 zeigt einen Foodprocessor mit einem Gehäuse auf welchem ein Antriebsaufsatz angeordnet werden kann. Weitere Küchengeräte sind in der US 4 155 656 und der US 4 197 018 offenbart.

Es ist Aufgabe der Erfindung, eine Küchenmaschine der eingangs genannten Art weiter zu entwickeln.

Zur Lösung der Aufgabe wird ein Aufsatz für eine Schüssel einer Küchenmaschine, mit einem Antrieb, insbesondere elektrischen Antrieb, für ein Antreiben eines Werkzeugs der Küchenmaschine gemäß Patentanspruch 1 bereitgestellt. Vorzugsweise umfasst der Aufsatz eine Öffnung und zwar vorzugsweise eine teilkreisartige oder sich U-förmig erstreckende Öffnung für ein Einfüllen von Nahrungsmitteln.

Der Aufsatz weist einen Antrieb auf, was eine kompakte Bauweise ermöglicht. Da der Aufsatz in einer Ausführungsform eine Öffnung umfasst, können hierüber während des Betriebs jederzeit Nahrungsmittel durch den Aufsatz hindurch in die zugehörige Schüssel gelangen, auf den der Aufsatz aufgesetzt worden ist. Ein Werkzeug, mit dem ein Nahrungsmittel verarbeitet wird, kann Bestandteil eines Anbauteils sein, welches während des Betriebs auf den Aufsatz zum Beispiel aufgesetzt ist. Nahrungsmittel, die durch dieses Anbauteil verarbeitet werden, können im Anschluss an die Verarbeitung durch die Öffnung des Aufsatzes hindurch in die Schüssel gelangen, so zum Beispiel aufgrund von Schwerkraft und vorzugsweise ohne dass es erforderlich ist, dass Anbauteil dafür abnehmen zu müssen. Alternativ oder ergänzend kann ein Werkzeug unterhalb des Aufsatzes während des Betriebes angebracht sein. Durch die Öffnung hindurch können nun Nahrungsmittel zum Beispiel manuell hinzugefügt werden.

Erstreckt sich eine Öffnung im Aufsatz in Form eines U oder eines Teilkreises, dann können vorteilhaft von unterschiedlichen Seiten aus Nahrungsmittel in die Schüssel durch die Öffnung hindurch gefüllt werden, was insbesondere dann von Vorteil ist, wenn eine Mehrzahl von Personen an der Zubereitung beteiligt sind. Außerdem kann diese Form der Öffnung dazu genutzt werden, dass in die Öffnung ein Wandbereich eines aufgesetzten Anbauteils hineinreicht, der im Schnitt einem Teilkreis oder einem U gleicht und der daher verarbeitete Nahrungsmittelverlust frei von Anbauteil in die Schüssel zu leiten vermag.

Umfasst der Aufsatz eine Öffnung, so gibt es bevorzugt einen zusätzlichen Deckel, mit dem die Öffnung bei Bedarf verschlossen werden kann. Der Deckel kann vorzugsweise kraftschlüssig und/oder formschlüssig mit dem Aufsatz verbunden werden. Ist die Öffnung durch den Deckel verschlossen werden, so kann kein Inhalt aus einer damit verschlossenen Schüssel mehr nach außen entweichen.

Der Antrieb ist erfindungsgemäß so beschaffen, dass dieser ein oberhalb sowie unterhalb des Aufsatzes angebrachtes Werkzeug anzutreiben vermag. Der Aufsatz verfügt daher sowohl auf der Oberseite als auch auf der Unterseite, also an zwei sich gegenüberliegenden Seiten über einen Abtrieb. Der Antrieb umfasst insbesondere eine Welle, die von beiden Seiten des Aufsatzes für ein Verbinden mit einem Werkzeug zugänglich ist, so dass die Welle mit einem Werkzeug zwecks Antriebs des Werkzeugs verbunden werden kann.
Der Aufsatz umfassen einen Ring bzw. ringförmigen Wandbereich mit einem Arm, der sich von der Ringinnenseite in Richtung Ringmitte erstreckt. Der Bereich zwischen dem Arm und dem Innenumfang des Rings bildet dann eine besonders große und räumlich ausgedehnte, teilkreisartige oder U-förmige Öffnung, durch die hindurch in einer einfach zu handhabenden Weise Nahrungsmittel von unterschiedlichen Seiten aus in eine Schüssel gegeben werden können.

Der Antrieb befindet sich im Arm. Der Antrieb umfasst insbesondere einen Elektromotor, der in einer Ausführungsform über eine vorzugsweise aufladbare Batterie mit Strom versorgt werden kann. Ein oder mehrere Batterien können sich im Arm und/ oder aber im Ring befinden. Der Antrieb kann darüber hinaus ein Getriebe umfassen. In der Regel gehört zum Antrieb eine Welle, die durch einen Elektromotor angetrieben werden kann.

Das freie Ende des Arms weist erfindungsgemäß an der Oberseite und an der Unterseite jeweils einen Abtrieb auf. Die Oberseite ist die Seite, die sich oben befindet, wenn der Aufsatz auf eine zugehörige Schüssel aufgesetzt ist. Das Ende des Arms und zwar insbesondere die Oberseite und/ oder die Unterseite umfassen in einer Ausführungsform bevorzugt eine jeweilige Stellfläche, auf der ein Anbauteil wie zum Beispiel ein Mixer oder eine Zitruspresse abgestellt werden kann. Zugleich kann ein solches auf einer solchen Stellfläche abgestelltes Anbauteil mit dem entsprechenden Abtrieb verbunden werden, um mit in dem antreibbaren Anbauteil Nahrungsmittel verarbeiten zu können. Eine solche Stellfläche verläuft insbesondere ringförmig um einen Abtrieb herum und weist vorzugsweise eine planparallele Oberfläche auf, um hierauf einen korrespondierenden Fuß eines Anbauteils abstellen zu können. Ein korrespondierender Fuß ist dann insbesondere hülsenförmig, so dass dieser mit einem Rand der Hülse vollflächig auf die Stellfläche aufgesetzt werden kann.

Vorzugsweise gibt es einen Schalter wie zum Beispiel einen Drehschalter, mit dem der Antrieb reguliert werden kann. Der Drehschalter weist vorzugsweise einen Abstand zur Oberseite des Aufsatzes auf. Die Oberseite des Aufsatzes ist die Seite, die sich oben befindet, wenn der Aufsatz in dafür vorgesehener Weise auf die Schüssel der Küchenmaschine aufgesetzt worden ist. Diese Ausführungsform erlaubt es vorteilhafter Weise, dass die Oberseite des Aufsatzes zugleich einen Fuß darstellen kann, der der Aufstellung des Aufsatzes auf einer Oberfläche wie zum Beispiel einer Tischoberfläche dient, um unabhängig von der Schüssel mithilfe eines darauf abgestellten Anbauteils ein Nahrungsmittel verarbeiten zu können. Der Schalter weist dann einen Abstand zur Oberfläche auf und kann daher problemlos bedient werden, selbst wenn es sich bei dem Schalter um einen Drehschalter handelt, um beispielsweise unterschiedliche Antriebsgeschwindigkeiten einstellen oder regulieren zu können.

Der Ring des Aufsatzes weitet sich in einer Ausgestaltung zu einer Seite trichterförmig auf und zwar zur Oberseite. Ist der Aufsatz auf eine Schüssel aufgesetzt, so steht eine sich trichterförmig aufweitende Öffnung zur Verfügung. Die Trichterform erleichtert dann das Einfüllen von Nahrungsmitteln in die Schüssel.

Der aufgeweitete Rand des Rings steht vorzugsweise gegenüber übrigen Bereichen des Aufsatzes vor und zwar insbesondere auch gegenüber dem vorgenannten Arm. Dies ermöglicht es, diesen aufgeweiteten Rand des Rings als Fuß zu nutzen, um den Aufsatz zum Beispiel auf einer Tischoberfläche standsicher so aufsetzen zu können, dass auf der gegenüberliegenden Seite ein Abtrieb mit einem Anbauteil wie zum Beispiel einem Mixer oder einer Zitruspresse für ein Verarbeiten von Nahrungsmitteln verbunden werden kann. Der Aufsatz kann dann unabhängig von einer Schüssel der Verarbeitung von Nahrungsmitteln dienen. Bei dieser Ausführungsform umfasst der vorgenannte Arm insbesondere eine Abstellfläche, auf der einen an Bauteil wie ein Mixer oder eine Zitruspresse abgestellt werden kann. Der obere Rand des Aufsatzes kann aber auch als Fuß genutzt werden, wenn dieser Rand sich nicht trichterförmig aufbereitet. Eine trichterförmige Aufweitung erhöht allerdings die Standsicherheit und ist daher auch bei einer Verwendung als Fuß zu bevorzugen.

Der aufgeweitete Rand ist vorzugsweise mit einem Ring aus rutschfestem Material wie Kautschuk versehen, um die vorgenannte Standsicherheit weiter zu verbessern. Der Ring muss nicht durchgehend verlaufen. Es genügen eine Mehrzahl von ringartigen Abschnitten. Kautschukmaterial kann auch lediglich ringartig angeordnet sein. Das Kautschukmaterial ist so angebracht, dass dieses auf einer Oberfläche aufsetzt, wenn die Oberseite des Aufsatzes als Fuß dient, um den Aufsatz zum Beispiel auf einer Tischoberfläche abzustellen.

Der Aufsatz ist in einer Ausführungsform vorteilhaft mit einer Fixiereinrichtung versehen, mit der der Aufsatz an einer Schüssel für eine Bearbeitung von Nahrungsmitteln in der Schüssel fixiert werden kann. Die Fixiereinrichtung umfasst insbesondere das Mittel, um den Aufsatz mithilfe einer Rastverbindung formschlüssig an der Schüssel befestigen zu können. Der Aufsatz kann bei dieser Ausführungsform auf den oberen Rand einer Schüssel aufgesetzt und im Anschluss daran mit der Schüssel mittels der Fixiereinrichtung fest verbunden werden, was den Betrieb der Küchenmaschine erleichtert. Die Fixiereinrichtung muss erst wieder gelöst werden, bevor der Aufsatz von der Schüssel wieder abgenommen werden kann.

Die Fixiereinrichtung umfasst in einer Ausführungsform zwei Griffbereiche bzw. Griffe, die seitlich und vorzugsweise gegenüberliegend am äußeren Rand des Aufsatzes angebracht sind. Die Griffbereiche können einerseits zum Ergreifen des Aufsatzes dienen. Die Griffbereiche sind ferner in einer Ausführungsform verschwenkbar angebracht und können beispielsweise gegen eine Federkraft aus ihrer fixierenden oder verrastenden Stellung manuell heraus geschwenkt werden. Die Griffbereiche können in einer Ausführungsform einen Rand einer Schüssel hakenförmig umgreifen, um so den Aufsatz an der Schüssel zu fixieren.

In einer Ausführungsform gibt es einen Deckel für den Aufsatz, mit dem die Öffnung bei Bedarf abgedeckt werden kann. Hierdurch werden Verluste vermieden, wenn ein Nahrungsmittel in der Schüssel verarbeitet wird. Es genügt, dass der Deckel lose aufgesetzt werden kann. Zur Erfindung gehört aber auch eine Ausführungsform mit Deckel, die für ein Schließen der Öffnung mit der Schüssel fest verbunden werden kann.

Der Aufsatz kann auf den oberen Rand einer Schüssel einer Küchenmaschine für eine Bearbeitung von Nahrungsmitteln in der Schüssel aufgesetzt werden. Insbesondere der Ring schließt dann mit dem oberen Rand ab, so dass eine dichte Verbindung zwischen dem oberen Rand der Schüssel und dem Ring vorliegt. Um verbessert zu vermeiden, dass Nahrungsmittel während einer Verarbeitung in der Schüssel durch die Verbindung zwischen dem oberen Rand der Schüssel und dem Ring hindurch austreten können, umfasst der Aufsatz in einer Ausführungsform vorzugsweise eine Nut, in die der obere Rand einer Schüssel hineinreicht, wenn der Aufsatz auf die Schüssel aufgesetzt ist.

Ein Abtrieb des Aufsatzes kann in einer Ausführungsform mit einem Rührbesen, einem Knethaken, einem Durchlaufschnitzler, einer Zitruspresse und/ oder einem Mixer der Küchenmaschine verbunden werden, um Nahrungsmittel damit zu verarbeiten. Der Antrieb des Aufsatzes vermag dann die entsprechenden Werkzeuge für ein Verarbeiten von Nahrungsmitteln anzutreiben.

Ein Durchlaufschnitzler ist ein Werkzeug, mit dem Nahrungsmittel mittels einer Reibe durch Raffeln oder Raspeln zerkleinert werden können. Dabei passieren die Nahrungsmittel die antreibbare Reibe. Ein Mixer umfasst ein Gefäß und am Grund des Gefäßes antreibbare Rührwerkzeuge, insbesondere in Form von Klingen für ein Zerkleinern und Mischen von Nahrungsmitteln. Eine Zitruspresse ist ein Werkzeug zum Herauspressen von Saft aus Zitrusfrüchten wie Zitronen, Limonen, Apfelsinen etc..

Der Aufsatz benötigt nur einen geringen Bauraum und erlaubt sehr flexibel, unterschiedliche Anbauteile für ein Verarbeiten von Nahrungsmitteln zu benutzen und antreiben zu können und zwar teilweise unabhängig von der Schüssel. Ein elektrischer Antrieb des Aufsatzes kann durch eine externe Stromquelle über eine Kabelverbindung mit Strom versorgt werden oder aber durch eine Batterie.

Nachfolgend wird die Erfindung anhand von Figuren näher verdeutlicht.

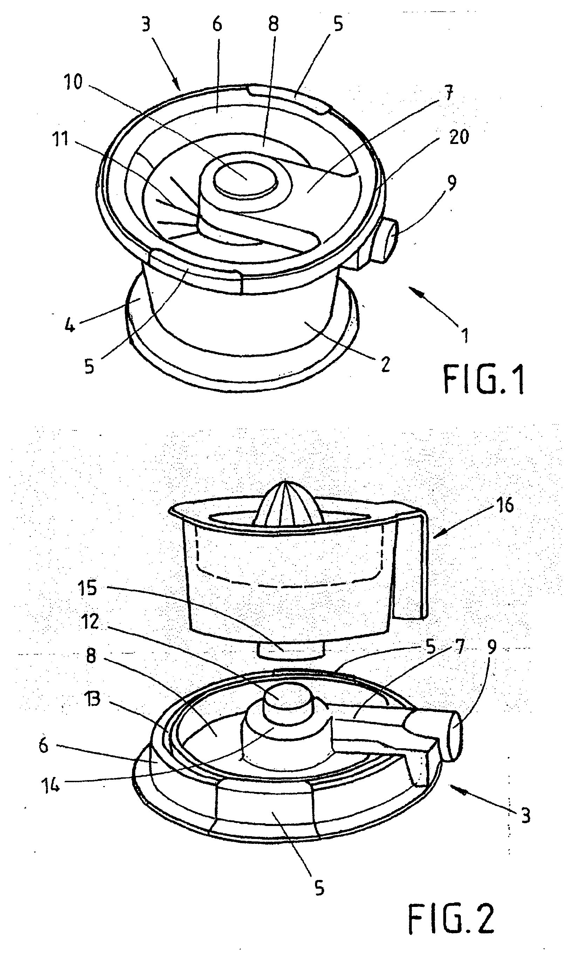

Die Figur 1 zeigt eine Küchenmaschine 1 mit einer Schüssel 2 und einem Aufsatz 3. Die Schüssel 2 kann beispielsweise mithilfe einer Bajonettverbindung mit einem Fuß 4 verbunden sein, um die Schüssel 2 besonders standsicher und stabil aufstellen zu können. Der Durchmesser der Abstellfläche des Fußes 4 ist dann insbesondere größer als der Durchmesser der Schlüssel 2.

Der Aufsatz 3 umfasst zwei Griffe 5, mit denen der Aufsatz 3 mit der Schüssel 2 fest verbunden werden kann. Die Griffe 5 sind gegen eine Federkraft verschwenkbar an dem äußeren Rand des Aufsatzes 3 sowie einander gegenüberliegend angebracht und umklammern für ein Fixieren einen dafür vorgesehenen Bereich der Schüssel 2. Es wird so durch eine Rastverbindung der Aufsatz 3 mit der Schüssel 2 fest verbunden.

Der Aufsatz 3 weist einen ringförmig verlaufenden Randbereich 6 und einen daran angebrachten Arm 7 auf. Der Arm 7 erstreckt sich vom Ring ausgehend bis zum Mittelpunkt des Rings, der durch den Randbereich 6 gebildet wird. Es verbleibt so eine Öffnung 8, durch die hindurch Nahrungsmittel in die Schüssel 2 gegeben werden können. Die Öffnung 8 erstreckt sich um den Arm 7 herum, so dass von unterschiedlichen Seiten aus Nahrungsmittel in die Schüssel 2 auch während des Betriebes gegeben werden können. Die Oberseite des ringförmigen Randbereichs steht gegenüber der Oberseite des Arms 7 hervor.

Im Arm 7 ist ein Antrieb untergebracht. Seitlich gibt es einen Drehschalter 9, mit dem der Antrieb ausgeschaltet und eingeschaltet sowie bei Bedarf geregelt werden kann und zwar insbesondere die Drehgeschwindigkeit. Der Drehschalter 9 weist einen Abstand zum oberen Rand des Aufsatzes auf.

Der Arm 7 ist an seinem freien Ende sowohl auf der Oberseite als auch auf der Unterseite mit einem Abtrieb versehen. Im Fall der Figur 1 ist der Abtrieb auf der Oberseite mit einer abnehmbaren Kappe 10 abgedeckt. Wird die Kappe 10 abgenommen, so kann ein Werkzeug mit dem dann zugänglichen Abtrieb verbunden werden. Die Kappe 10 schützt vor Verschmutzung, wenn der darunter befindliche Abtrieb nicht benötigt wird.

Der Abtrieb auf der Unterseite ist mit einem Besen 11 verbunden, mit dem in der Schüssel 2 befindliche Nahrungsmittel beispielsweise verrührt werden können.

Die Oberseite des ringartigen Randes 6 des Aufsatzes 3 ist zumindest abschnittsweise mit einem Kautschukmaterial 20 ringartig versehen. Das Kautschukmaterial 20 steht gegenüber den übrigen Bereichen des Aufsatzes 3 nach oben hervor und kann als rutschfester Fuß genutzt werden.

In der Figur 2 wird der Aufsatz 3 im auf der Oberseite abgestellten Zustand gezeigt. Es ist nun der Abtrieb 12 schematisch dargestellt zu sehen, an dem im Fall der Figur 1 ein Rührbesen 11 befestigt worden ist. Eine umlaufende Nut 13 ist vorhanden, in die der obere Rand einer Schüssel 2 im aufgesetzten Zustand - wie in der Figur 1 dargestellt - hineinreicht, um so zu verhindern, dass Nahrungsmittel im Verbindungsbereich zwischen Schüssel 2 und Aufsatz 3 austreten können.
Um den Abtrieb 12 herum gibt es eine ringförmig verlaufende, vorzugsweise planparallele Abstellfläche 14, auf die ein entsprechender zylinderförmiger bzw. hülsenförmiger Bereich 15 eines Werkzeugs oder eines Anbauteils wie zum Beispiel eine Zitruspresse 16 abgestellt werden kann. Wird ein solches Anbauteil wie zum Beispiel eine Zitruspresse 16 wie beschrieben abgestellt, dann wird zugleich der Abtrieb 12 mit dem entsprechenden Werkzeug so verbunden, dass dieses für ein Verarbeiten von Lebensmitteln durch den Aufsatz 3 angetrieben werden kann.

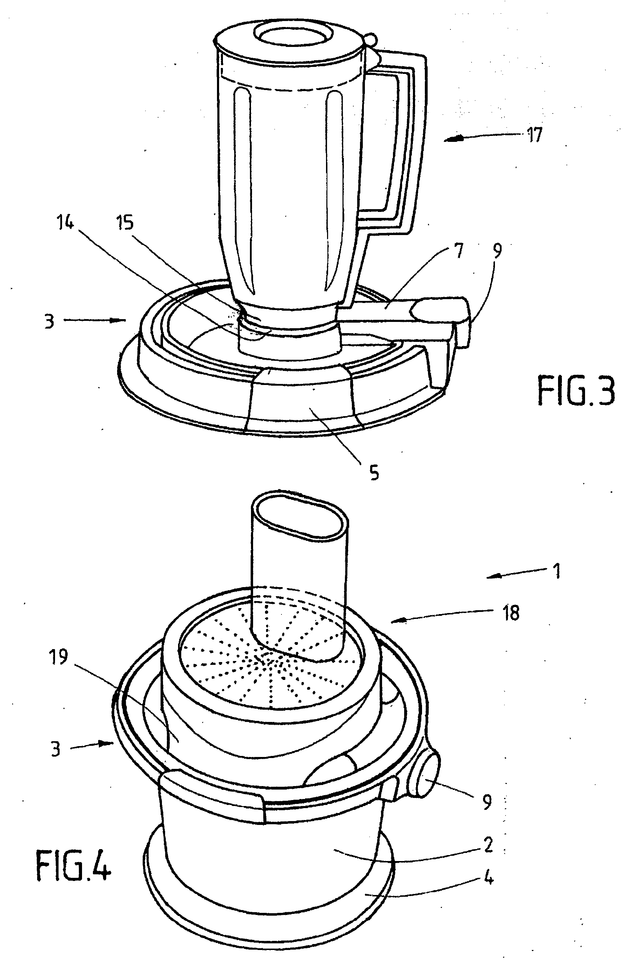

In der Figur 3 wird dargestellt, wie ein Mixer 17 auf dieser Abstellfläche 14 des Aufsatzes 3 für ein Verarbeiten von Nahrungsmitteln abgestellt ist. In diesem Zustand gibt es einen Abstand zwischen einer entsprechenden Abstellfläche wie eine Tischoberfläche und dem Drehregler 9, um problemlos die Geschwindigkeit des Antriebs regeln zu können.

Ein Anbauteil wie zum Beispiel ein Durchlaufschnitzler 18 kann - wie in der Figur 4 gezeigt - in einer Ausführungsform mit dem oberen Abtrieb des Aufsatzes 3 für ein Verarbeiten von Nahrungsmitteln verbunden sein, während der Aufsatz 3 auf eine Schüssel 2 aufgesetzt ist. Ein solches Anbauteil 18 kann einen äußeren Wandbereich 19 umfassen, der in die Öffnung 8 hineinreicht, um so sicherzustellen, dass vom Anbauteil 18 verarbeitete Nahrungsmittel ohne Verluste in die Schüssel 2 hinein gelangen. Ein solcher in die Öffnung 8 hineinreichender Wandbereich 19 dient dann der verlustfreien Führung von Nahrungsmitteln vom Anbauteil 18 in die Schüssel 2 hinein und ist im Schnitt U-förmig oder teilkreisförmig.

## Patentansprüche

1. Aufsatz (3) für eine Schüssel (2) einer Küchenmaschine (1), mit einem Antrieb, insbesondere elektrischen Antrieb, für ein Antreiben eines Werkzeugs (11, 16, 17, 18) der Küchenmaschine, insbesondere wobei der Aufsatz (3) eine Öffnung (8) für ein Einfüllen von Nahrungsmitteln umfasst, wobei der Aufsatz (3) einen Ring (6) mit einem Arm (7) umfasst, der sich von der Ringinnenseite in Richtung Ringmitte erstreckt, wobei sich der Antrieb im Arm (7) befindet und das freie Ende des Arms (7) zumindest einen Abtrieb (12) aufweist, **dadurch gekennzeichnet, dass** das freie Ende des Arms (7) an der Oberseite und an der Unterseite jeweils einen Abtrieb (12) aufweist.

2. Aufsatz nach Anspruch 1, **dadurch gekennzeichnet, dass** sich der Ring (6) zu einer Seite trichterförmig aufweitet.

3. Aufsatz nach dem vorhergehenden Anspruch, **dadurch gekennzeichnet, dass** der aufgeweitete Rand des Rings (6) gegenüber übrigen Bereichen des Aufsatzes (3) vorsteht.

4. Aufsatz nach dem vorhergehenden Anspruch, **dadurch gekennzeichnet, dass** der aufgeweitete Rand mit einem Ring oder ringartigen oder ringartig angeordneten, vorstehenden Abschnitten (11) aus Kautschuk versehen ist.

5. Aufsatz nach einem der vorhergehenden Ansprüche, **dadurch gekennzeichnet, dass** eine Fixiereinrichtung (5) vorgesehen ist, mit der der Aufsatz (3) an einer Schüssel (2) für eine Bearbeitung von Nahrungsmitteln in der Schüssel (2) fixiert werden kann.

6. Küchenmaschine (1) mit einer Schüssel (2), **gekennzeichnet durch** einen Aufsatz (3) nach einem der vorhergehenden Ansprüche, der auf den oberen Rand der Schüssel (2) für eine Bearbeitung von Nahrungsmitteln in der Schüssel (2) aufgesetzt werden kann oder aufgesetzt ist.

7. Küchenmaschine nach dem vorherigen Anspruch, **dadurch gekennzeichnet, dass** ein Abtrieb (12) des Aufsatzes mit einem Rührbesen (11), einem Knethaken, einem Durchlaufschnitzler(18), einer Zitruspresse (16) und/ oder einem Mixer (17) der Küchenmaschine (1) verbunden werden kann oder verbunden ist.

8. Küchenmaschine nach einem der beiden vorhergehenden Ansprüche mit einem Anbauteil (18), welches mit einem Abtrieb des Aussatzes (3) verbunden werden kann und welches einen äußeren Wandbereich (19) zur Führung von verarbeiteten Nahrungsmitteln in die Schüssel (2) hinein umfasst, wobei der Wandbereich (19) im verbundenen Zustand vorzugsweise in die Öffnung (8) hinein reicht.

## Claims

1. Attachment (3) for a key (2) of a cooking machine (1), with a drive, especially an electric drive, for driving a tool (11, 16, 17, 18) of the cooking machine, especially wherein the attachment (3) comprises an opening (8) for filling with foodstuffs, wherein the attachment (3) comprises a ring (6) with an arm (7) which extends from the ring's inner side in the direction of the ring's centre, wherein the drive is located in the arm (7) and the free end of the arm (7) has at least one output (12), **characterised in that** the free end of the arm (7) has an output (12) on the upper side and the lower side in each case.

2. Attachment according to claim 1, **characterised in that** the ring (6) widens in a funnel-like manner towards one side.

3. Attachment according to the preceding claim, **characterised in that** the widened edge of the ring (6) protrudes compared with other regions of the attachment (3).

4. Attachment according to the preceding claim, **characterised in that** the widened edge is provided with a ring or ring-shaped protruding sections (11) or protruding sections (11) disposed in a ring-like manner, made of rubber.

5. Attachment according to one of the preceding claims, **characterised in that** a fixing device (5) is provided, with which the attachment (3) can be fixed to a key (2) for a processing of foodstuffs in the key (2).

6. Cooking machine (1) with a key (2), **characterised by** an attachment (3) according to one of the preceding claims, which can be positioned or is positioned on the upper edge of the key (2) for the processing of foodstuffs in the key (2).

7. Cooking machine according to the preceding claim, **characterised in that** an output (12) of the attachment can be connected or is connected to a whisk (11), a kneading hook, a slicer (18), a citrus press (16) and/or a mixer (17) of the cooking machine (1).

8. Cooking machine according to one of the two preceding claims with an add-on part (18) which can be connected to an output of the attachment (3) and which comprises an outer wall region (19) for guiding processed foodstuffs into the key (2), wherein the wall region (19) preferably reaches into the opening (8) in the connected state.

## Revendications

1. Pièce rapportée (3) pour un bol (2) d'un robot de cuisine (1), comprenant un entraînement, notamment un entraînement électrique, pour entraîner un outil (11, 16, 17, 18) du robot de cuisine, sachant en particulier que la pièce rapportée (3) comprend une ouverture (8) pour y verser des aliments, que la pièce rapportée (3) comprend un anneau (6) pourvu d'un bras (7) qui s'étend de la face intérieure de l'anneau vers le centre de l'anneau, que l'entraînement est situé dans le bras (7) et que l'extrémité libre du bras (7) présente au moins une prise de force (12), **caractérisée en ce que** l'extrémité libre du bras (7) présente sur la face supérieure et la face inférieure respectivement une prise de force (12).

2. Pièce rapportée selon la revendication 1, **caractérisée en ce que** l'anneau (6) s'élargit en forme d'entonnoir vers un côté.

3. Pièce rapportée selon la revendication précédente, **caractérisée en ce que** le bord élargi de l'anneau (6) est protubérant par rapport à d'autres zones de la pièce rapportée (3).

4. Pièce rapportée selon la revendication précédente, **caractérisée en ce que** le bord élargi est pourvu d'un anneau, ou de portions protubérantes (11) en forme d'anneau ou disposées en anneau, en caoutchouc.

5. Pièce rapportée selon l'une des revendications précédentes, **caractérisée en ce qu'**il est prévu un moyen de fixation (5) au moyen duquel la pièce rapportée (3) peut être fixée sur un bol (2) en vue d'un traitement d'aliments dans le bol (2).

6. Robot de cuisine (1) comprenant un bol (2), **caractérisé par** une pièce rapportée (3) selon l'une des revendications précédentes, laquelle peut être placée, ou est placée sur le bord supérieur du bol (2) en vue d'un traitement d'aliments dans le bol (2).

7. Robot de cuisine selon la revendication précédente, **caractérisé en ce qu'**une prise de force (12) de ladite pièce rapportée peut être assemblée, ou est assemblée avec un fouet (11), un crochet pétrisseur, une râpe/éminceur (18), un presse-agrume (16) et/ou un blender (17) du robot de cuisine (1).

8. Robot de cuisine selon l'une des deux revendications précédentes comprenant une pièce de montage (18) qui peut être assemblée avec une prise de force de la pièce rapportée (3) et qui comprend une zone de paroi extérieure (19) servant à acheminer les aliments traités dans le bol (2), ladite zone de paroi (19) s'étendant à l'état assemblé de préférence dans l'ouverture (8).
